# EUROPEAN PATENT SPECIFICATION

(11) **EP 2 293 004 B1**
(45) Date of publication and mention of the grant of the patent: **25.10.2017**
(21) Application number: 10169050.1
(22) Date of filing: 09.07.2010
(51) Int. Cl.: F28F 9/02, F16L 37/098, F16L 37/088, B60H 1/00

(54) **Coupling assembly for a vehicle air-conditioning unit**
Kopplungsbaugruppe für eine Farhzeug-Klimaanlage
Ensemble d'accouplement pour unité de climatisation de véhicule

(30) Priority: 13.07.2009 DE 102009032852; 06.08.2009 DE 102009036463
(43) Date of publication of application: 09.03.2011
(73) Proprietor: Valeo Klimasysteme GmbH, 96476 Rodach (DE)
(72) Inventor: Luer, Armin, 31234, BLUMENHAGEN (DE); Strathenke, Oliver, 49143, BISSENDORF (DE)
(74) Representative: Metz, Gaëlle

(56) References cited:
- EP-A1- 1 065 427
- EP-A2- 0 287 791
- EP-A2- 2 017 520
- WO-A1-02/43553
- GB-A- 2 251 046
- US-A1- 2006 202 475
- US-A1- 2007 228 731

## Description

The invention relates to a coupling assembly for a vehicle air-conditioning unit, with a tubular component and a coupling component for coupling the tubular component to a connecting part. The invention also relates to a vehicle air-conditioning unit and a method for coupling a tubular component of a vehicle air-conditioning unit to a connecting part.

Tubular components for vehicle air-conditioning units made of plastic, which include a single-piece coupling component for coupling the tubular component to a connecting part, are known in the state of the art. Furthermore, metal pipes are known in which a coupling component is injection-molded from plastic. Production of such coupling assemblies is complex, and for connection to different connecting components a tubular and coupling component assembly must be completely replaced.

The object of this invention is to provide a coupling assembly for a vehicle air-conditioning unit, in which the individual components can be manufactured easily and in a cost-effective manner, allowing flexible application of the individual components and a simple and flexible method for coupling a tubular component of a vehicle air-conditioning unit to a connecting part. Document US 2007/228731 describes an example of a coupling assembly.

The object of the invention is achieved by means of a coupling assembly for a vehicle air-conditioning unit with a tubular component and a coupling component for coupling the tubular component to a connecting part, where the coupling component is a separate part that is fixed to the tubular component with a locking connection. In this manner, the tubular component and coupling component can be manufactured separately, simplifying and making cheaper and more flexible the manufacture of both components, in particular, more cost-effective and flexible than for a tubular component with an injection-molded coupling component. Also, tubular components and the separate coupling components can be transported separately, in particular, via separate routes, it being advantageous that required transport volume always be lower for separate tubular components and separate coupling components than for connected assemblies consisting of a tubular component and a coupling component. A coupling component is assembled simply by sliding it onto a tubular component until it snaps in place there. Moreover, it is possible to connect the same tubular component to different connecting parts using coupling components of different design.

A coupling component is preferably associated with a specific tubular component. In this manner, several tubular components, each equipped with a coupling component, can be flexibly connected to different connecting parts.

It can be provided with a rotationally fixed connection that fixes a coupling component to a tubular component in the circumferential direction. In this way, rotation of the tubular component on its axis relative to the coupling component is prevented.

According to a preferred embodiment of the invention, the rotationally fixed connection is fitted with a slot in the tubular component and a radial inwardly projecting edge in the coupling component which make a form-fitting interlock. This makes possible a simple embodiment of a rotationally fixed connection.

Alternatively, the rotationally fixed connection can include a section of the tubular component in which the tubular cross-section is not circular, where the tubular cross-section is preferably flattened or bulged out on at least one side, or polygonal or elliptical. A non-circular tubular cross-section will break the rotational symmetry of a tubular component, so that a tubular component on an attached coupling component cannot be rotated freely. Such a tubular component section can be placed at various points on a tubular component.

Preferably, the rotationally fixed connection is formed so that a tubular component and a coupling component are fixed at one, preferably exactly one, predetermined angle to one another. This, for example, would allow simple alignment of the coupling component to the tubular component at a given angle.

The locking connection can be placed in an area of the coupling component, so that when coupled it lies at least partly within the connecting part, the connecting part thus preventing release of the locking connection between the tubular component and the coupling component. In this way, the locking connection between the coupling component and the tubular component is additionally secured by the connecting part.

Alternatively, the locking connection can be placed in an area of the coupling component that lies outside of the connecting part when the coupling assembly is coupled. Such a locking connection is also possible in the coupled state of the coupling assembly, allowing, for example, inspection of the locking connection in a coupled state. Moreover, with such locking connections, it would also be possible to first couple the coupling component with the connecting part and then lock the tubular component to the coupling component.

The locking connection can have a latching lug on the coupling component which engages in a slot or protrusion of the tubular component. This makes possible a simple and flexible design of the locking connection. According to the invention, a connecting part is provided that has a form-fitting, preferably releasable connection, to the coupling component.

According to the invention, the form-fitting connection of the coupling component with the connecting part consists of a clamp which engages in the slots of the coupling component and the connecting part. In this way, a form-fitting connection of the coupling component can easily be made or released by placing or removing the clamp. According to the invention, the form-fitting connection of the coupling component with the connecting part is formed in such a manner that the connecting part and the coupling component are fixed to each other at one, preferably exactly one, predetermined angle. This will allow precise alignment between the coupling component and the connecting part, and can serve to prevent incorrect connection of several connecting parts, should the connecting parts each have different orientations of the coupling component.

According to a preferred embodiment, a gasket should be provided between the tubular component and the connecting part. This gasket would prevent leakage of fluids or gases between the tubular component and the connecting part. Since the gasket would create a direct seal between the tubular component and the connecting part, maximum security against leakage would be ensured.

Alternatively, a first gasket between the tubular component and the coupling component and a second gasket between the coupling component and the connecting part may be provided.

The tubular component can be made of metal, preferably aluminum. Metal tubular components can be used for larger pressure and temperature ranges than, for example, plastic pipe components.

The coupling component should preferably be made of plastic. This would make possible a particularly simple design of the coupling component.

To solve the above problem an air-conditioning unit for a vehicle is envisioned which would also include a housing, at least one tubular component and a coupling element as described above. Such an air-conditioning unit can be connected to different connecting parts by simple replacement with different described coupling components.

The coupling component can be fastened to the housing with a connection rotationally fixed in the circumferential direction. In this way, the orientation of the coupling component is determined directly by the connection with the housing.

The rotationally fixed connection should preferably have axially extending projections on the coupling component and recesses in the housing that form a positive interlock with each other. This will allow a simple rotationally fixed connection with a low space requirement.

Preferably, the rotationally fixed connection should be formed so that the housing and a coupling component are fixed at one, preferably exactly one, predetermined angle to one another.

Moreover, the invention also relates to a method of coupling a tubular component of a vehicle air-conditioning unit to a connecting part, consisting of the following steps: Provision of a tubular component, connecting part and a separate coupling component; attachment of the coupling component to the end of the tubular component and attachment of the coupling component on the tubular component by means of a locking connection; and insertion of the coupling component that is fixed to the tubular component into the connecting part, and attachment of the coupling component to the connecting part. Such a procedure allows easy connection of a vehicle air-conditioning unit to a connecting part, where the tubular component and the coupling component are separate components. In particular, in vehicle air-conditioning units with a tightly fastened tubular component, different embodiments of the coupling component will make connection to different connecting part possible.

According to a preferred procedure variant, the coupling component is attached at one, preferably exactly one, predetermined angle to the tubular component and fixed to the tubular component with a rotationally fixed connection at this angle, and/or the coupling component is attached to the tubular component at one, preferably exactly one, predetermined angle to a housing of the air conditioner and fixed to the housing with a rotationally fixed connection at this angle. In this manner, rotation of the coupling component relative to the tubular component or housing of the air-conditioning unit is prevented, and the angle of the coupling component to the tubular component or the housing of the air-conditioning unit is fixed.

The coupling component can be attached to the connecting part at one, preferably exactly one, predetermined angle to the connecting part, and fixed to the connecting part by a form-fitting connection at this angle. Due to the exact specification of the angle between components of the coupling assembly, faulty connection is prevented, in particular, with several tubular components to be connected to multiple connecting parts.

Preferably, the locking connection between the tubular component and the coupling component should be standardized. In this way, a coupling component can be used with different tubular components of different vehicle air-conditioning units, or different coupling components can be used with a tubular component for connection to different connecting parts.

Other features and advantages of the invention will become apparent from the ensuing description and the subsequent drawings, to which reference is made. The drawings present:
- Figure 1: A sectional view of a coupling assembly based on an initial embodiment the invention.
- Figure 2: Another sectional view of the coupling assembly of Figure 1.
- Figure 3: An exploded view of the coupling assembly of Figure 1.
- Figure 4: A perspective view of a coupling component based on the first embodiment of the invention.
- Figure 5: A perspective view of the coupling assembly of Figure 1.
- Figure 6: A further perspective view of the coupling assembly of Figure 1.
- Figure 7: A sectional view of the coupling assembly of Figure 1.
- Figure 8: A perspective view of the coupling assembly with a connecting part based on the first embodiment.
- Figure 9: A further perspective view of the coupling assembly of Figure 8.
- Figure 10: A sectional view of a coupling assembly based on a second embodiment of the invention.
- Figure 11: A tubular component of the coupling assembly of Figure 10.
- Figure 12: A coupling component of the coupling assembly of Figure 10.
- Figure 13: A coupling component connected to a tubular component based on the second embodiment of the invention.
- Figure 14: A perspective view of the coupling assembly with a connecting part based on Figure 10.
- Figure 15: A perspective view of a coupling component based on the second embodiment of the invention.
- Figure 16: A perspective view of the coupling assembly based on Figure 10.
- Figures 17a to 17c: A sectional view of the coupling assembly along the sectional plane XVII-XVII, based on the second embodiment shown in Figure 10.
- Figure 18: Another sectional view of a coupling assembly based on the second embodiment of the invention.
- Figure 19: A sectional view of a coupling assembly based on a third embodiment the invention.
- Figure 20: A perspective view of the tubular component of Figure 19.
- Figure 21: A perspective view of the coupling component of Figure 19.
- Figure 22: A perspective view of the tubular component associated with the coupling component of Figure 19.
- Figure 23: A perspective view of the coupling assembly with a connecting part based on Figure 19.
- Figure 24: A perspective view of the rear area of the coupling component based on the third embodiment of the invention.
- Figure 25: A perspective view of the rear area of the coupling assembly with connecting part based on the third embodiment of the invention.
- Figure 26: A sectional view of a coupling assembly based on a third embodiment the invention.
- Figure 27: A detailed view of an air-conditioning unit housing according to the invention.
- Figure 28: A perspective view of a tubular component associated with a coupling component according to a fourth embodiment of the invention.
- Figure 29: An exploded view of the tubular component and the coupling component of Figure 28.
- Figure 30: A perspective view of the coupling component of Figure 28.
- Figure 31: A first perspective view of a coupling assembly with the coupling component of Figure 28.
- Figure 32: A second perspective view of the coupling assembly of Figure 28, and
- Figure 33: A cross section through the coupling assembly of Figure 31 in an assembled state.

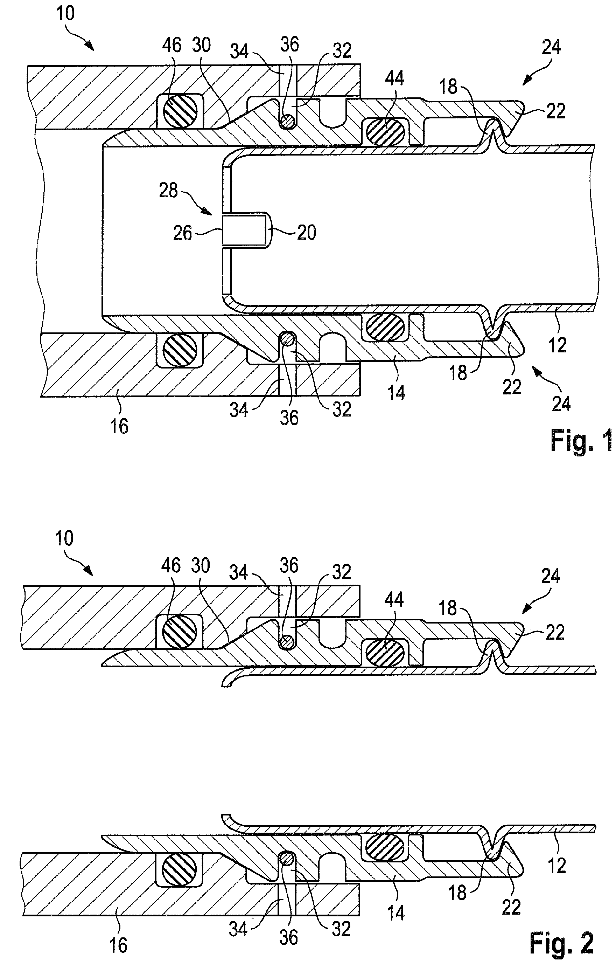

A first embodiment of coupling assembly 10 for a vehicle air-conditioning unit is described in Figures 1 to 9. A tubular component 12 of a vehicle air-conditioning unit is connected via a coupling component 14 to a connecting part 16.

Figure 1 and Figure 2, respectively, show a sectional view of the coupling assembly 10 coupled to connecting part 16, where Figure 1 is a top view of the section and Figure 2 only represents the sectional plane.

Tubular component 12 has a fold that forms a circumferential protrusion 18. A slot 20 is provided at the front end of tubular component 12.

Coupling component 14 is fitted onto the end of tubular component 12. In the rear area of coupling component 14, coupling component 14 has multiple latching lugs 22 which grip on the protrusion 18 of tubular component 12, whereby a locking connection 24 is formed between coupling component 14 and tubular component 12.

The inside of coupling component 14 is provided with a radial inwardly projecting lug 26 which fits together positively with the slot 20 in tubular component 12 to form a non-rotatable connection 28 between the tubular component 12 and coupling component 14. Due to the form-fitting engagement of the radial inwardly projecting lug 26 of coupling component 14 and slot 20 of tubular component 12, rotation of tubular component 12 relative to coupling component 14 is prevented, whereby tubular component 12 and coupling component 14 are fixed at a predetermined angle to each other. Lug 26 and slot 20 in the variant shown in Figure 1 are essentially rectangular.

It would also be possible to provide a number of interlocking lugs 26 and slots 20, for example, in a symmetrical circumferential distribution, which would allow fixation of tubular component 12 and coupling component 14 at several predefined angles, or, fixing at an exact single angle using, for example, an asymmetric distribution or different lug 26 and slot sizes 20.

Coupling component 14 is inserted into connecting part 16 and lies with contact surface 30 on a stop collar of connecting part 16. In this position, slots 32 on coupling component 14 and slots 34 on connecting part 16 are adjusted axially to each other. A clamp 36 extends through the slots 32 at coupling component 14 and slots 34 at the connecting part 16, thus producing a form-fitting connection 38 between coupling component 14 and connecting part 16. Form-fitting connection 38 fixes coupling component 14 to connecting part 16 in the axial direction.

The clamp 36 fitted on connecting part 16 is releasable, whereby the form-fitting connection 38 of coupling component 14 and connecting part 16 can be released.

Coupling component 14, in the area of the slots 32, has two radial outwardly projecting lugs 40, which constitute a part of form-fitting connection 38, and engage in the provided recesses 42 in connecting part 16, so that connecting part 16 and coupling component 14 are fixed at a predetermined angle to each other. The lugs 40 are arranged on opposite sides of coupling component 14 and are of different sizes. In this manner, form-fitting connection 38 fixes connecting part 16 and coupling component 14 to each other at an exactly predetermined angle. Instead of varying sizes of lugs 40 and recesses 42, asymmetric distributions of lugs 40 and recesses 42 can, for example, be provided to fix a predetermined angle.

A primary gasket 44 is provided between tubular component 12 and coupling component 14. A second gasket 46 is provided between coupling component 14 and connecting part 16. Gaskets 44 and 46 are each designed as O-rings. Naturally, other types of gaskets 44, 46 can also be provided.

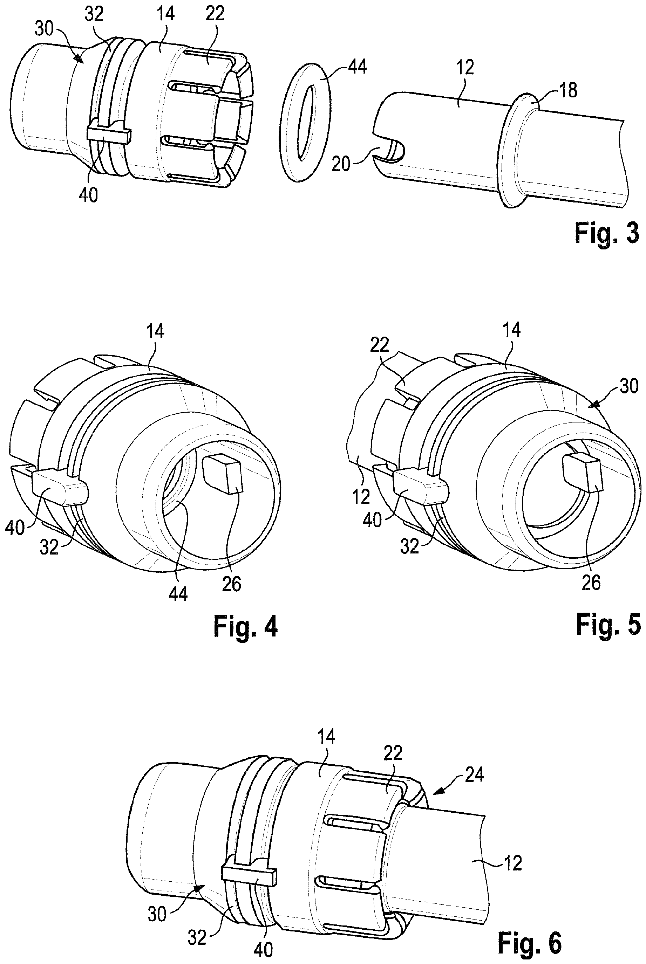

Figure 3 shows an exploded view of coupling component 14 with the first gasket 44 and tubular component 12.

Figure 4 shows a perspective view of coupling component 14 with the first gasket 44 inserted. Figures 5 and 6 show a perspective view of coupling component 14 connected with tubular component 12.

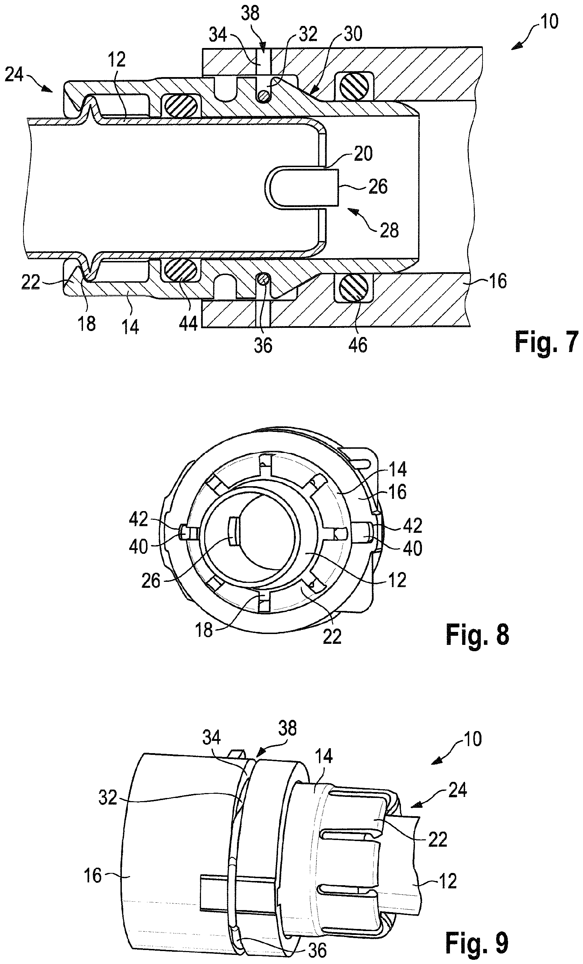

Figure 7 shows a further sectional view of the first embodiment, although in this version the facing side of the radial inwardly projecting lug 26 on tubular component 12 is rounded, simplifying positioning of tubular component 12 in the circumferential direction of coupling component 14.

Figure 8 and Figure 9 show two perspective views of coupling assembly 10 connected to connecting part 16. In Figure 8 are shown lugs 40 of coupling component 14 and recesses 42 of connecting part 16, which set the angle of the form-fitting connection 38 of coupling component 14 with connecting part 16.

In Figure 9 slots 32, 34 of coupling component 14 or connecting part 16 and clamp 36 of the form-fitting connection 38 are clearly visible.

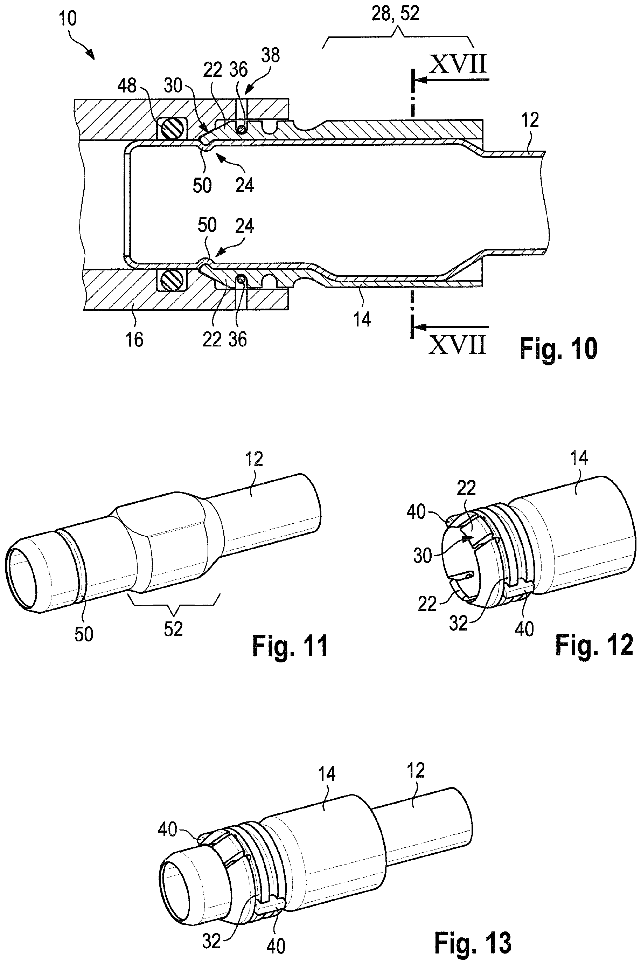

In Figures 10-18 a second embodiment of coupling assembly 10 is shown. Form-fitting connection 38 between coupling component 14 and connecting part 16 corresponds to the form-fitting connection 38 of the first embodiment and is not explained further below. Connecting part 16 is identical to connecting part 16 of the first embodiment.

A gasket 48 is provided that is basically identical to the second gasket 46 of the first embodiment.

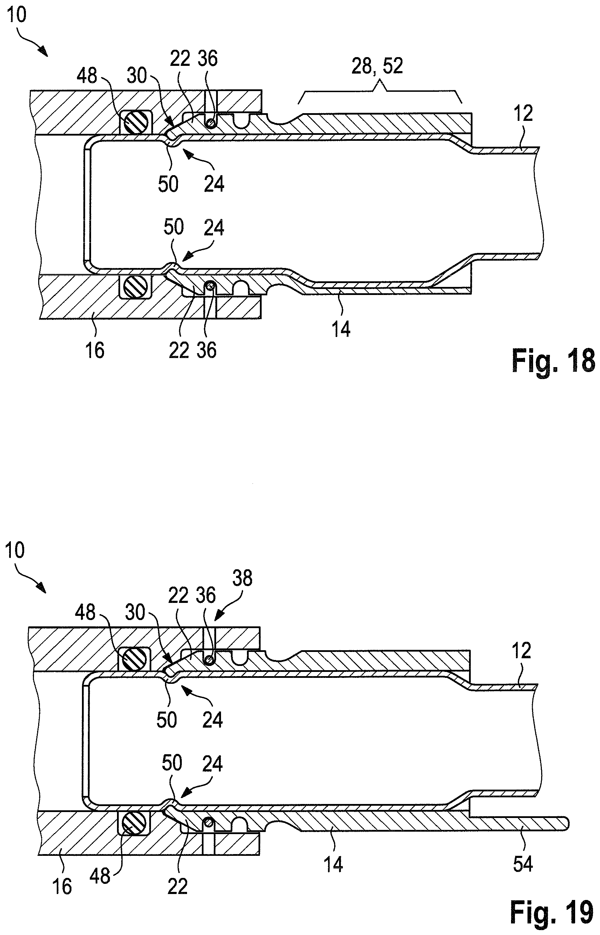

Figures 10 and 18, respectively, show a sectional view of the second embodiment of coupling assembly 10, where Figure 10 is a top view of the sectional plane and Figure 18 only shows the sectional plane.

Coupling component 14 is fitted onto the end of tubular component 12. A locking connection 24 in the front area of coupling component 14 has two latching lugs 22 which engage in a slot 50 of tubular component 12. Slot 50 is formed by a circular groove in tubular component 12.

Locking connection 24 is fitted to an area of coupling component 14 that lies within the connecting part 16 when coupled to coupling assembly 10. Latching lugs 22 form part of contact surface 30 of coupling component 14. In the coupled state of coupling assembly 10, contact surface 30 of coupling component 14 is placed against the stop collar of connecting part 16, whereby radial movement of latching lugs 22 from slot 50 is completely prevented by connecting part 16. In this manner, connecting part 16 prevents loosening of locking connection 24 between tubular component 12 and coupling component 14 in the coupled state of the coupling assembly 10.

A rotationally fixed connection 28 is made possible in the second embodiment by the shaping of section 52 of tubular component 12. In this section 52 of tubular component 12 the tubular cross-section is not circular. The non-circular tubular cross-section breaks the rotational symmetry of tubular component 12 and prevents free rotation of tubular component 12 in the attached coupling component 14.

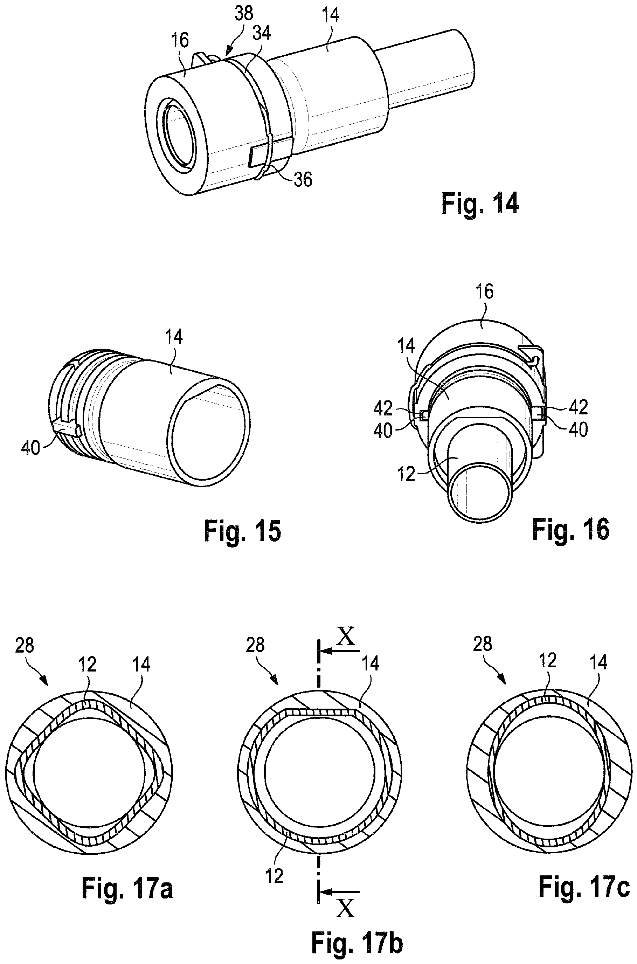

In Figure 11 is shown a perspective view of tubular component 12. In section 52 tubular component 12 has a larger radius, whereby tubular component 12 in section 52 is flattened on one side. As can be seen clearly in Figures 15 and 16, the geometry of coupling component 14 corresponds to the geometry of section 52 of tubular component 12, whereby the tubular components 12 of the variants shown in Figures 11 and 15 are fixed exactly at a predetermined angle.

Figure 12 shows coupling component 14 with the two latching lugs 22. Latching lugs 22 are arranged circumferentially on opposite sides of coupling component 14. Naturally, it is also possible to distribute several latching lugs 22, in particular, over the entire circumference of coupling component 14.

Figure 13 shows a perspective view of coupling component 14 connected with tubular component 12. As can be seen clearly in this view, the front side of tubular component 12 protrudes beyond coupling component 14. As can be clearly seen in Figures 10 and 18, this makes possible the use of a single gasket 48 between tubular component 12 and connecting part 16.

Figure 14 shows a perspective view of connecting part 16 coupled to coupling assembly 10 with form-fitting connection 38.

Figure 15 shows a perspective rear view of coupling component 14, where the non-circular, side-flattened cross-section for receiving section 52 of tubular component 12 can easily be seen.

Figure 16 shows a rear perspective view of coupling assembly 10 connected to connecting part 16, where it is easy to recognize form-fitting connection 38 with lugs 40 of coupling component 14, and recesses 42 of connecting part 16.

In Figures 17a, 17b and 17c are shown different embodiments of non-circular tubular cross-sections. In Figure 17a the tubular cross-section is substantially polygonal in shape, with four corners. The symmetry of the polygonal tubular cross-section allows four preset angles between tubular component 12 and coupling component 14, whereby tubular component 12 may be rotated a quarter turn each time.

Figure 17b corresponds substantially to the tubular cross-section of tubular component 12 shown in Figures 10-16. Sectional plane XX corresponds to the sectional planes of Figures 10 and 18. Thus, tubular component 12 is flattened on one side in section 52. This geometry gives exactly one angle between tubular component 12 and coupling component 14.

Figure 17c shows an elliptical geometry of the non-circular tubular cross-section, which allows two possible angles.

Naturally, other non-circular tubular cross-sections for section 52 of tubular component 12 are also possible, such as oval or egg-shaped cross-sections, protrusions on one or more sides, or other irregular geometries.

A third embodiment of the invention is shown in Figures 19 to 27. The form-fitting connection of coupling component 14 with connecting part 16 corresponds in turn to the form-fitting connection 38 of the first embodiment. Locking connection 24 in the front area of coupling component 14 corresponds to locking connection 24 of the second embodiment. These elements are not addressed in further detail below.

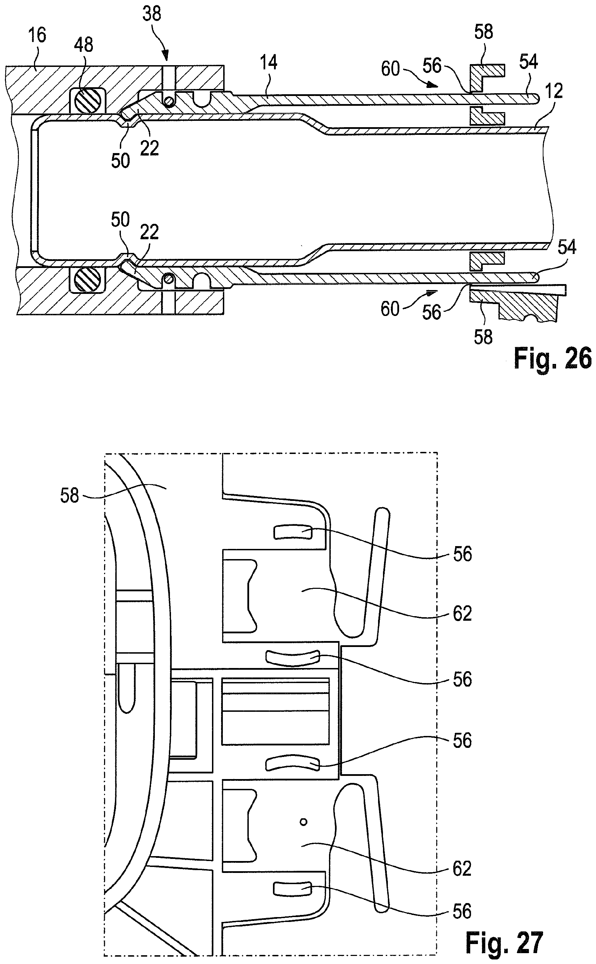

Figures 19 and 26, respectively, show a sectional view of the third embodiment of coupling assembly 10, where Figure 19 is a top view of the sectional plane and Figure 26 only shows the sectional plane. Figure 26 also shows a part of housing 58 of the air-conditioning unit.

Coupling component 14 has two axially extending projections 54.

Projections 54 positively engage in recesses 56 in a housing 58 of an air-conditioning unit to which the tubular component 12 is connected. Projections 54 with recesses 56 in housing 58 form a rotationally fixed connection 60 between the housing 58 and coupling component 14.

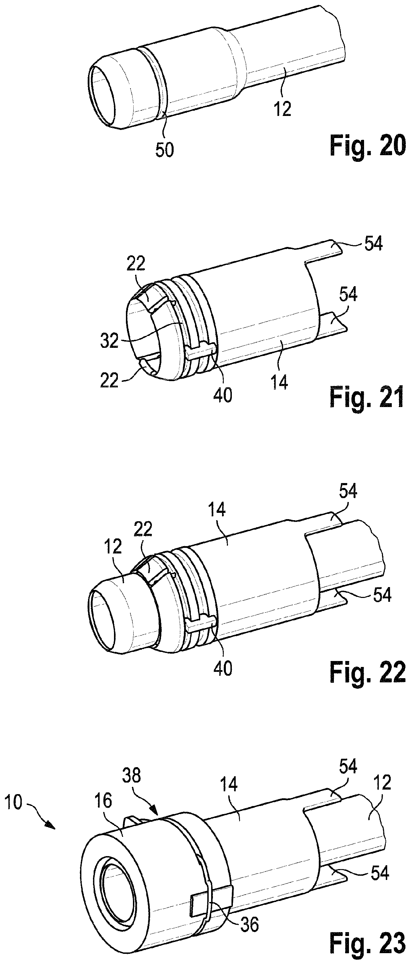

Figure 20 shows tubular component 12 with slot 50 that runs circumferentially. The cross-section of tubular component 12 is circular. Coupling component 14 with the axially extending projections 54 are shown in Figure 21. No rotationally fixed connection between tubular component 12 and coupling component 14 is provided, which simplifies the design of tubular component 12, making manufacture of tubular component 12 particularly cost-effective.

Figure 22 shows coupling component 14 fixed to tubular component 12, and figure 23 shows the total coupling assembly 10 with the form-fitting connection 38 coupled to connecting part 16.

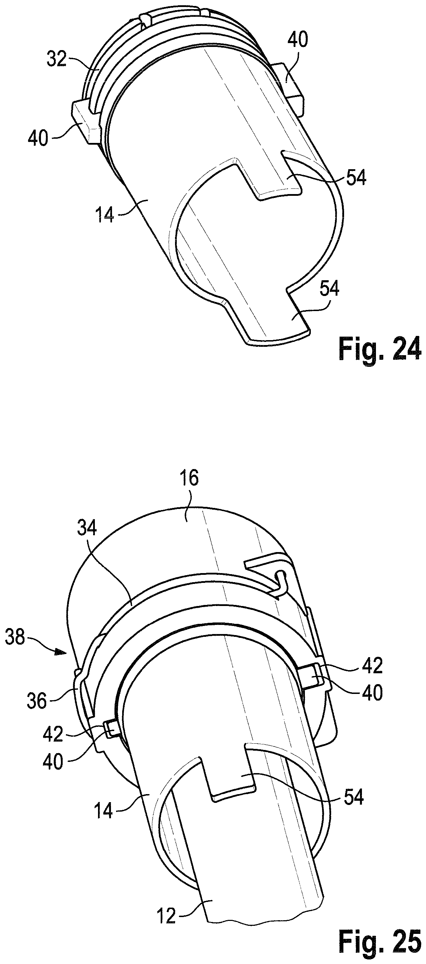

Figures 24 and 25 show, respectively, a rear perspective view of coupling component 14 with the projections 54, and coupling component 14 in Figure 25 is coupled to tubular component 12 and connecting part 16. In Figure 24 it is clearly visible that the two projections 54 differ in size in the circumferential direction. Due to the different sizes of projections 54 and recesses 56, housing 58 and coupling component 14 are fixed to each other by the rotationally fixed connection 60 at an exactly predetermined angle.

Figure 27 also shows part of housing 58 of the air-conditioning unit. Housing 58 has two openings 62, through which tubular components 12 can protrude from housing 58 of the air-conditioning unit. In addition to openings 62, two recesses 56 are arranged for receiving the projections 54 of coupling component 14.

The different sized recesses 56 are oriented differently at the two openings 62, whereby the coupling components 14 are also arranged in different orientations on housing 58. As the exact form-fitting connection 38 also specifies an exact angle between coupling component 14 and connecting part 16, the orientation of connecting part 16 is also determined by the arrangement of recesses 56 on housing 58. In this manner, faulty connection with several tubular components 12 and connecting parts 16 is prevented.

In all embodiments, tubular component 12 is made of metal, in particular, aluminum. Coupling component 14 is made of plastic. Depending on component requirements, particularly in relation to temperature and pressure, other materials can also be used.

The various connections between tubular component 12, coupling component 14 and connecting part 16 shown can, of course, also be embodied in other ways. In particular, it is possible to interchange interlocking lugs and slots of the respective elements.

In the following, a method for coupling a tubular component 12 of a vehicle air-conditioning unit to a connecting part 16 is described. As a first process step, tubular component 12, connecting element 16 and a separate connecting part 14 are provided. It is also possible that several tubular components 12 and connecting parts 16 be provided, for example, inlet and outlet pipes for a vehicle air-conditioning unit. Each tubular component 12 is thereby associated with exactly one coupling component 14.

Coupling component 14 is inserted at the end of tubular component 12 and attached to tubular component 12 via locking connection 24. Locking connection 24 can be fitted in the rear area of coupling component 14, as shown in Figure 1 of the first embodiment, or in the front area of coupling component 14, as in the second embodiment shown in Figure 10.

The coupling component 14 fixed to tubular component 12 is introduced into connecting part 16 and secured to connecting part 16. The form-fitting connection 38 is provided for fastening.

Tubular components 12 and coupling components 14 can thus be treated as separate components up to the point of actual assembly of a vehicle air-conditioning unit, in particular, in the manufacture of components. If, for example, tubular components 12 are firmly attached to a vehicle air-conditioning unit, then it will be possible to connect different coupling components 14 for the vehicle air-conditioning unit to different connecting parts 16. It is also possible to make locking connection 24 for fastening coupling component 14 to tubular component 12 releasable, thus making possible the exchange of coupling component 14 and replacement of the air-conditioning unit, and connection to different connecting parts 16.

Coupling component 14 is attached to tubular component 12 at an exactly predetermined angle with respect to tubular component 12, and fixed at this angle to tubular component 12 by means of a rotationally fixed connection 28 (according to the first and second embodiments). This is particularly advantageous when the air-conditioning unit is not in the immediate vicinity of connecting part 16, or when the tubular component 12 between the air-conditioning unit and the connecting part 16 is angled.

With a coupling component 14 based on the third embodiment, coupling component 14 is attached to tubular component 12 at an exactly given angle to housing 58 of the air-conditioning unit and fixed by means of a rotationally fixed connection 60 to the housing 58 at this angle. This embodiment is advantageous when tubular component 12 is fitted at no specific angle between the air-conditioning unit and connecting part 16, and connecting part 16 is near the air-conditioning unit. Coupling component 14 can be introduced into connecting part 16 at one, preferably exactly one, predetermined angle to connecting part 16, and fixed to connecting part 16 with a form-fitting connection 38 at this angle. In this manner, accidental incorrect connection of tubular component 12 to the wrong connecting part 16 is prevented.

With the first embodiment shown in Figures 1-9, coupling of coupling component 14 with connecting part 16 and subsequent insertion of tubular component 12 in coupling component 14 is possible, because the locking connection 24 in the coupled state is located outside of connecting part 16.

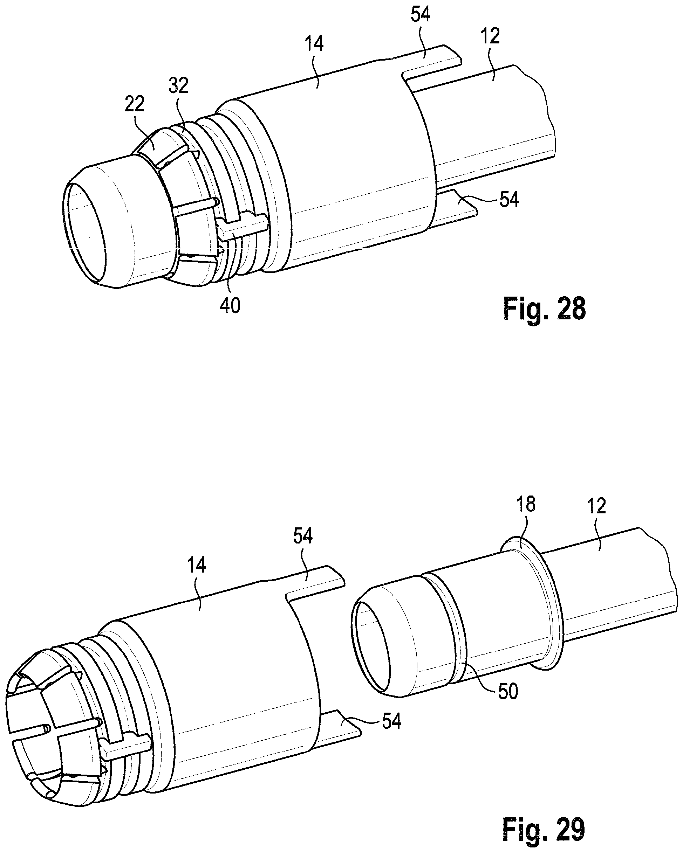

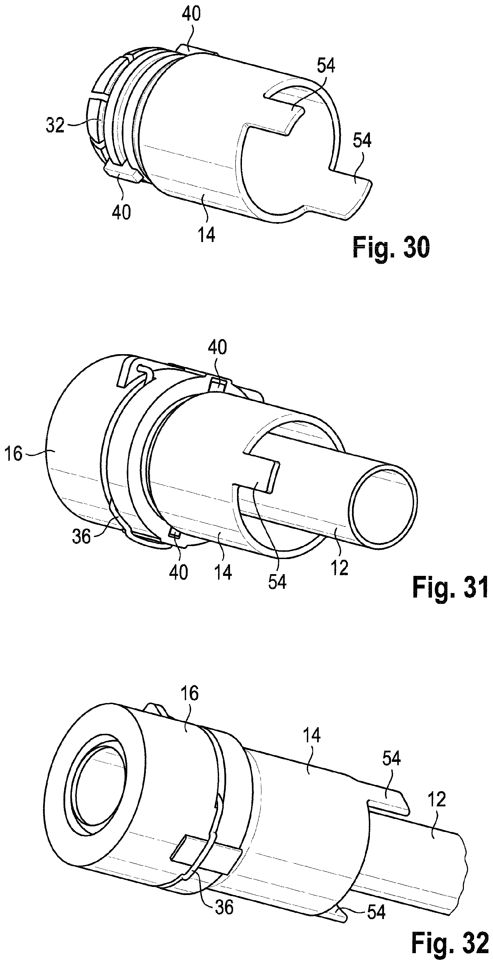

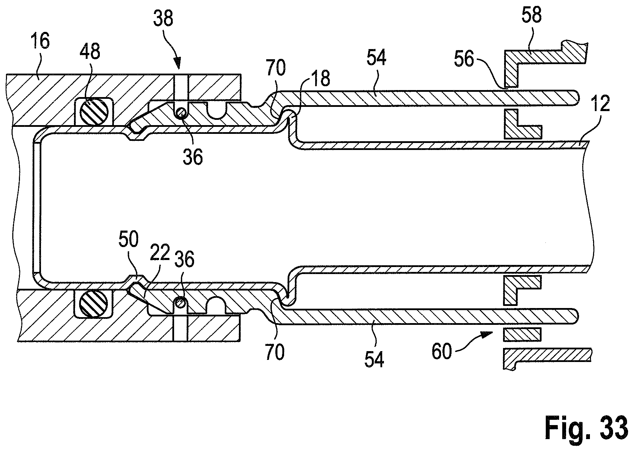

Figures 28-33 show a coupling assembly according to a fourth embodiment. For characteristics that are known from previous assemblies, the same reference numbers are used, and these will be referred to the above explanations.

The coupling assembly of the fourth embodiment is essentially based on the third embodiment, but uses an additional circumferential band or protrusion 18 on tubular component 12, as known from the first embodiment. Unlike the first embodiment, protrusion 18 does not serve to interact with locking connection 24. In the fourth embodiment, protrusion 18 serves as an abutment for contact shoulder 70, which is provided "on the back side" of coupling component 14, i.e. at the end of tubular component 12 and the opposite side of locking connection 24.

On assembly, coupling component 14 is inserted onto tubular component 12. Protrusion 18 together with the contact shoulder 70 prevent coupling component 14 from being pushed too far onto the tubular component, thereby damaging other components, such as tubular insulation. Instead, protrusion 18 together with contact shoulder 70 ensure that coupling component 14 is pushed right up to the position on tubular component 12 where latching lug 22 on coupling component 14 makes a locking connection 24 with the groove of the pipe formed by slot 50. In this manner, no small tolerances arise and high process reliability is ensured.

Another feature of the fourth embodiment is that tubular component 12 can rotate freely in coupling component 14 (ignoring friction due to locking connection 24, etc.). This ensures that the tubular component can be oriented "correctly" to the coupling component during assembly, thus being tensioned relative to coupling component 14 and thus to housing 58.

## Claims

1. Coupling assembly (10) for a vehicle air-conditioning unit with a tubular component (12) and a coupling component (14) for coupling the tubular component (12) to a connecting part (16), whereby the coupling component (14) constitutes a separate component that can be inserted onto the tubular component (12), which is connected to tubular component (12) by a locking connection (24), wherein a connecting part (16) is provided that is connected via a form-fitting, preferably releasable, connection (38) to the coupling component (14), the form-fitting connection (38) of the coupling component (14) is established with connecting part (16) via a clamp (36) which engages in slots (32, 34) on coupling component (14) and connecting part (16), **characterized in that**
the coupling component (14), in the area of the slots (32), has two radial outwardly projecting lugs (40), which constitute a part of the form-fitting connection (38), and engage in provided recesses (42) in the connecting part (16), so that connecting part (16) and coupling component (14) are fixed at a predetermined angle to each other.

2. Coupling assembly (10) of Claim 1, **characterized in that** the coupling component (14) is associated with exactly one tubular component (12).

3. Coupling assembly (10) according to one of the preceding Claims, **characterized in that** a rotationally fixed connection (28) is provided, which fixes coupling component (14) in the circumferential direction to tubular component (12).

4. Coupling assembly (10) of Claim 3, **characterized in that** the rotationally fixed connection (28) has a slot (20) in the tubular component (12) and a radial inwardly projecting lug (26) of coupling component (14), which positively engage each other.

5. Coupling assembly (10) according to Claim 3 or 4, **characterized in that** the rotationally fixed connection (28) includes a section (52) of the tubular component (12), in which the tubular cross-section is not circular, where the tubular cross-section is flattened, preferably at least on one side, or bulged, polygonal or elliptical.

6. Coupling assembly (10) according to any of Claims 3-5, **characterized in that** the rotationally fixed connection (28) is formed so that tubular component (12) and coupling component (14) are fixed to each other at one, preferably exactly one, predetermined angle.

7. Coupling assembly (10) according to one of the preceding Claims, **characterized in that** locking connection (24) is provided on an area of coupling component (14), which in the coupled state of coupling assembly (10) lies at least partially within the connecting part (16), so that the connecting element (16) prevents release of the locking connection (24) between tubular component (12) and coupling component (14).

8. Coupling assembly (10) according to Claims 1-6, **characterized in that** the locking connection (24) is provided on an area of coupling component (14), which in the coupled state of the coupling assembly (10) lies outside of the connecting part (16).

9. Coupling assembly (10) according to one of the preceding Claims, **characterized in that** the locking connection (24) has a latching lug (22) on the coupling component (14), which engages in a slot (50) or protrusion (18) of the tubular component (12).

10. Coupling assembly according to any of the preceding Claims, **characterized in that** the coupling component (14) has several latching lugs (22) and a contact shoulder (70), which is designed to rest against a protrusion (18) of the tubular component (12).

11. Coupling assembly (10) according to any of the preceding Claims, **characterized in that** the form-fitting connection (38) of the coupling component (14) with the connecting part (16) is formed in such a way that connecting part (16) and coupling component (14) are fixed in exactly one predetermined angle to each other.

12. Coupling assembly (10) according to one of the preceding Claims, **characterized in that** a gasket (48) is provided between tubular component (12) and connecting part (16).

13. Coupling assembly (10) according to one of the preceding Claims, **characterized in that** a first gasket (44) between tubular component (12) and coupling component (14) and a second gasket (46) between coupling component (14) and connecting part (16) are provided.

14. Coupling assembly (10) according to one of the preceding Claims, **characterized in that** tubular component (12) is made of metal, preferably aluminum.

15. Coupling assembly (10) according to one of the previous Claims, **characterized in that** the coupling component (14) is made of plastic.

16. Air-conditioning unit comprising a housing (58) and a coupling assembly (10) according to one of the preceding claims.

17. Air conditioning unit according to Claim 16, **characterized in that** the coupling component (14) is fixed to the housing (58) by a connection (60) rotationally fixed in the circumferential direction.

18. Air conditioning unit according to Claim 17, **characterized in that** the rotationally fixed connection (60) is fitted with projections (54) extending in the axial direction of the coupling component (14) and recesses (56) on housing (58), which all form-fittingly engage each other.

19. Air conditioning unit according Claims 17 or 18, **characterized in that** the rotationally fixed connection (60) is formed so that housing (58) and coupling component (14) are fixed to each other at one, preferably exactly one, predetermined angle.

20. The method of coupling a coupling assembly according to any of Claims 1-15 includes the following steps:
- Provision of tubular component (12), connecting part (16) and a separate coupling component (14),
- Attachment of the coupling component (14) to the end of the tubular component (12) and fixing of the coupling component (14) to the tubular component (12) with a locking connection (24), and
- Insertion of the coupling component (14) fixed to the tubular component (12) into connecting part (16) and fixing of coupling component (14) to connecting part (16).

21. The method of Claim 20, **characterized in that** the coupling component (14) is inserted at one, preferably exactly one, predetermined angle with respect to tubular component (12) onto tubular component (12), and fixed to tubular component (12) with a rotationally fixed connection (28) at this angle, and/or that coupling component (14) is attached to tubular component (12) at one, preferably exactly one, predetermined angle on housing (58) of the air-conditioning unit of any of Claims 16-19 and fixed with a rotationally fixed connection (60) to the housing (58) at this angle.

22. The method of Claim 20 or 21, **characterized in that** the coupling component (14) is introduced at exactly one predetermined angle with respect to the connecting part (16) in the connecting part (16), and fixed by means of the form-fitting connection (38) at this same angle to the connecting part (16).

## Patentansprüche

1. Kopplungsbaugruppe (10) für eine Fahrzeug-Klimaanlage mit einer rohrförmigen Komponente (12) und einer Kopplungskomponente (14) zum Ankoppeln der rohrförmigen Komponente (12) an ein Anschlussteil (16), wobei die Kopplungskomponente (14) eine separate Komponente darstellt, welche auf die rohrförmige Komponente (12) aufgesteckt werden kann und welche mit der rohrförmigen Komponente (12) durch eine Verriegelungsverbindung (24) verbunden wird, wobei ein Anschlussteil (16) vorgesehen ist, welches über eine formschlüssige, vorzugsweise lösbare Verbindung (38) mit der Kopplungskomponente (14) verbunden wird, wobei die formschlüssige Verbindung (38) der Kopplungskomponente (14) mit dem Anschlussteil (16) über eine Schelle (36) hergestellt wird, welche in Schlitze (32, 34) an der Kopplungskomponente (14) und dem Anschlussteil (16) einrastet,
**dadurch gekennzeichnet, dass**
die Kopplungskomponente (14) im Bereich der Schlitze (32) zwei radial nach außen vorstehende Ansätze (40) aufweist, welche einen Teil der formschlüssigen Verbindung (38) bilden und in vorgesehene Vertiefungen (42) in dem Anschlussteil (16) einrasten, so dass das Anschlussteil (16) und die Kopplungskomponente (14) unter einem vorbestimmten Winkel aneinander befestigt werden.

2. Kopplungsbaugruppe (10) nach Anspruch 1, **dadurch gekennzeichnet, dass** die Kopplungskomponente (14) genau einer rohrförmigen Komponente (12) zugeordnet ist.

3. Kopplungsbaugruppe (10) nach einem der vorhergehenden Ansprüche, **dadurch gekennzeichnet, dass** eine drehfeste Verbindung (28) vorgesehen ist, welche die Kopplungskomponente (14) in der Umfangsrichtung an der rohrförmigen Komponente (12) fixiert.

4. Kopplungsbaugruppe (10) nach Anspruch 3, **dadurch gekennzeichnet, dass** die drehfeste Verbindung (28) einen Schlitz (20) in der rohrförmigen Komponente (12) und einen radial nach innen vorstehenden Ansatz (26) der Kopplungskomponente (14) aufweist, welche formschlüssig ineinandergreifen.

5. Kopplungsbaugruppe (10) nach Anspruch 3 oder 4,
**dadurch gekennzeichnet, dass** die drehfeste Verbindung (28) einen Abschnitt (52) der rohrförmigen Komponente (12) beinhaltet, in welchem der Rohrquerschnitt nicht kreisförmig ist, wobei der Rohrquerschnitt abgeflacht, wenigstens auf einer Seite, oder ausgebaucht, polygonal oder elliptisch ist.

6. Kopplungsbaugruppe (10) nach einem der Ansprüche 3-5, **dadurch gekennzeichnet, dass** die drehfeste Verbindung (28) so ausgebildet ist, dass die rohrförmige Komponente (12) und die Kopplungskomponente (14) unter einem, vorzugsweise genau einem, vorbestimmten Winkel aneinander befestigt werden.

7. Kopplungsbaugruppe (10) nach einem der vorhergehenden Ansprüche, **dadurch gekennzeichnet, dass** die Verriegelungsverbindung (24) auf einem Bereich der Kopplungskomponente (14) vorgesehen ist, welcher im gekoppelten Zustand der Kopplungsbaugruppe (10) wenigstens teilweise innerhalb des Anschlussteils (16) liegt, so dass das Anschlusselement (16) ein Lösen der Verriegelungsverbindung (24) zwischen der rohrförmigen Komponente (12) und der Kopplungskomponente (14) verhindert.

8. Kopplungsbaugruppe (10) nach den Ansprüchen 1-6, **dadurch gekennzeichnet, dass** die Verriegelungsverbindung (24) auf einem Bereich der Kopplungskomponente (14) vorgesehen ist, welcher im gekoppelten Zustand der Kopplungsbaugruppe (10) außerhalb des Anschlussteils (16) liegt.

9. Kopplungsbaugruppe (10) nach einem der vorhergehenden Ansprüche, **dadurch gekennzeichnet, dass** die Verriegelungsverbindung (24) einen Rastansatz (22) an der Kopplungskomponente (14) aufweist, welcher mit einem Schlitz (50) oder Vorsprung (18) der rohrförmigen Komponente (12) in Eingriff gelangt.

10. Kopplungsbaugruppe nach einem der vorhergehenden Ansprüche, **dadurch gekennzeichnet, dass** die Kopplungskomponente (14) mehrere Rastansätze (22) und einen Kontaktabsatz (70), welcher dafür ausgebildet ist, an einem Vorsprung (18) der rohrförmigen Komponente (12) zur Anlage zu kommen, aufweist.

11. Kopplungsbaugruppe (10) nach einem der vorhergehenden Ansprüche, **dadurch gekennzeichnet, dass** die formschlüssige Verbindung (38) der Kopplungskomponente (14) mit dem Anschlussteil (16) auf eine solche Weise gebildet wird, dass das Anschlussteil (16) und die Kopplungskomponente (14) unter genau einem vorbestimmten Winkel aneinander befestigt werden.

12. Kopplungsbaugruppe (10) nach einem der vorhergehenden Ansprüche, **dadurch gekennzeichnet, dass** eine Dichtung (48) zwischen der rohrförmigen Komponente (12) und dem Anschlussteil (16) vorgesehen ist.

13. Kopplungsbaugruppe (10) nach einem der vorhergehenden Ansprüche, **dadurch gekennzeichnet, dass** eine erste Dichtung (44) zwischen der rohrförmigen Komponente (12) und der Kopplungskomponente (14) und eine zweite Dichtung (46) zwischen der Kopplungskomponente (14) und dem Anschlussteil (16) vorgesehen sind.

14. Kopplungsbaugruppe (10) nach einem der vorhergehenden Ansprüche, **dadurch gekennzeichnet, dass** die rohrförmige Komponente (12) aus Metall, vorzugsweise Aluminium, hergestellt ist.

15. Kopplungsbaugruppe (10) nach einem der vorhergehenden Ansprüche, **dadurch gekennzeichnet, dass** die Kopplungskomponente (14) aus Kunststoff hergestellt ist.

16. Klimaanlage, welche ein Gehäuse (58) und eine Kopplungsbaugruppe (10) nach einem der vorhergehenden Ansprüche umfasst.

17. Klimaanlage nach Anspruch 16, **dadurch gekennzeichnet, dass** die Kopplungskomponente (14) an dem Gehäuse (58) durch eine Verbindung (60) befestigt ist, die in der Umfangsrichtung drehfest ist.

18. Klimaanlage nach Anspruch 17, **dadurch gekennzeichnet, dass** die drehfeste Verbindung (60) mit vorspringenden Teilen (54), die sich in der axialen Richtung der Kopplungskomponente (14) erstrecken, und Vertiefungen (56) am Gehäuse (58) ausgestattet ist, welche alle formschlüssig ineinandergreifen.

19. Klimaanlage nach den Ansprüchen 17 oder 18, **dadurch gekennzeichnet, dass** die drehfeste Verbindung (60) so ausgebildet ist, dass das Gehäuse (58) und die Kopplungskomponente (14) unter einem, vorzugsweise genau einem, vorbestimmten Winkel aneinander befestigt werden.

20. Verfahren zum Koppeln einer Kopplungsbaugruppe nach einem der Ansprüche 1-15, welches die folgenden Schritte beinhaltet:
- Bereitstellen einer rohrförmigen Komponente (12), eines Anschlussteils (16) und einer separaten Kopplungskomponente (14),
- Anbringung der Kopplungskomponente (14) am Ende der rohrförmigen Komponente (12) und Befestigen der Kopplungskomponente (14) an der rohrförmigen Komponente (12) mit einer Verriegelungsverbindung (24), und
- Einführen der an der rohrförmigen Komponente (12) befestigten Kopplungskomponente (14) in das Anschlussteil (16) und Befestigen der Kopplungskomponente (14) an dem Anschlussteil (16).

21. Verfahren nach Anspruch 20, **dadurch gekennzeichnet, dass** die Kopplungskomponente (14) unter einem, vorzugsweise genau einem, vorbestimmten Winkel bezüglich der rohrförmigen Komponente (12) auf die rohrförmige Komponente (12) aufgesteckt wird und an der rohrförmigen Komponente (12) mit einer drehfesten Verbindung (28) unter diesem Winkel befestigt wird, und/oder dass die Kopplungskomponente (14) an der rohrförmigen Komponente (12) unter einem, vorzugsweise genau einem, vorbestimmten Winkel am Gehäuse (58) der Klimaanlage nach einem der Ansprüche 16-19 angebracht wird und mit einer drehfesten Verbindung (60) unter diesem Winkel an dem Gehäuse (58) befestigt wird.

22. Verfahren nach Anspruch 20 oder 21, **dadurch gekennzeichnet, dass** die Kopplungskomponente (14) unter genau einem vorbestimmten Winkel bezüglich des Anschlussteils (16) in das Anschlussteil (16) eingeführt wird und mittels der formschlüssigen Verbindung (38) unter eben diesem Winkel an dem Anschlussteil (16) befestigt wird.

## Revendications

1. Ensemble raccord (10) pour unité de climatisation de véhicule ayant un composant tubulaire (12) et un composant de raccordement (14) pour raccorder le composant tubulaire (12) à un connecteur (16), moyennant quoi le composant de raccordement (14) constitue un composant séparé qui peut être inséré sur le composant tubulaire (12) et qui est raccordé au composant tubulaire (12) par un raccord de verrouillage (24),
dans lequel est disposé un connecteur (16) qui est raccordé au composant de raccordement (14) par l'intermédiaire d'un raccord (38) ajusté, de préférence amovible, le raccord (38) ajusté du composant de raccordement (14) est établi avec le connecteur (16) par l'intermédiaire d'un collier (36) qui est en prise dans les fentes (32, 34) sur le composant de raccordement (14) et le connecteur (16),
**caractérisé en ce que** le composant de raccordement (14), dans la zone des fentes (32), comporte deux saillies radiales (40) dépassant vers l'extérieur, qui constituent une partie du raccord (38) ajusté, et entrent en prise dans des évidements (42) ménagé dans le connecteur (16), si bien que le connecteur (16) et le composant de raccordement (14) sont fixés l'un à l'autre sous un angle prédéterminé.

2. Ensemble raccord (10) selon la revendication 1,
**caractérisé en ce que** le composant de raccordement (14) est associé à exactement un composant tubulaire (12).

3. Ensemble raccord (10) selon l'une quelconque des revendications précédentes, **caractérisé en ce qu'**est disposé un raccord (28) fixe en rotation, qui fixe dans le sens de la circonférence le composant de raccordement (14) au composant tubulaire (12).

4. Ensemble raccord (10) selon la revendication 3,
**caractérisé en ce que** le raccord (28) fixe en rotation comporte une fente (20) dans le composant tubulaire (12) et une saillie radiale (26) dépassant vers l'intérieur dans le composant de raccordement (14), qui sont en contact direct l'une avec l'autre.

5. Ensemble raccord (10) selon la revendication 3 ou 4, **caractérisé en ce que** le raccord (28) fixe en rotation comprend une section (52) du composant tubulaire (12), dans laquelle la section transversale tubulaire n'est pas circulaire, où la section transversale tubulaire est aplatie, de préférence au moins sur un côté, ou renflée, polygonale ou elliptique.

6. Ensemble raccord (10) selon l'une quelconque des revendications 3 à 5, **caractérisé en ce que** le raccord (28) fixe en rotation est conformé de façon à ce que le composant tubulaire (12) et le composant de raccordement (14) soient fixés l'un à l'autre, sous un, de préférence exactement un, angle prédéterminé.

7. Ensemble raccord (10) selon l'une quelconque des revendications précédentes, **caractérisé en ce que** le raccord de verrouillage (24) est disposé sur une zone du composant de raccordement (14) qui, dans l'état raccordé de l'ensemble raccord (10), se trouve au moins partiellement à l'intérieur du connecteur (16), de sorte que le connecteur (16) empêche le desserrage du raccord de verrouillage (24) entre le composant tubulaire (12) et le composant de raccordement (14).

8. Ensemble raccord (10) selon l'une quelconque des revendications 1 à 6, **caractérisé en ce que** le raccord de verrouillage (24) est disposé sur une zone du composant de raccordement (14) qui, dans l'état raccordé de l'ensemble raccord (10), se trouve à l'extérieur du connecteur (16).

9. Ensemble raccord (10) selon l'une quelconque des revendications précédentes, **caractérisé en ce que** le raccord de verrouillage (24) comporte une saillie de verrouillage (22) sur le composant de raccordement (14), qui entre en prise avec une fente (50) ou une protubérance (18) du composant tubulaire (12).

10. Ensemble raccord selon l'une quelconque des revendications précédentes, **caractérisé en ce que** le composant de raccordement (14) comporte plusieurs saillies de verrouillage (22) et un épaulement de contact (70), qui est conçu pour reposer contre une protubérance (18) du composant tubulaire (12).

11. Ensemble raccord (10) selon l'une quelconque des revendications précédentes, **caractérisé en ce que** le raccord (38) ajusté du composant de raccordement (14) avec le connecteur (16) est conformé de telle façon que le connecteur (16) et le composant de raccordement (14) sont fixés l'un par rapport à l'autre sous exactement un angle prédéterminé.

12. Ensemble raccord (10) selon l'une quelconque des revendications précédentes, **caractérisé en ce qu'**un joint statique (48) est disposé entre le composant tubulaire (12) et le connecteur (16).

13. Ensemble raccord (10) selon l'une quelconque des revendications précédentes, **caractérisé en ce que** on trouve un premier joint statique (44) entre le composant tubulaire (12) et le composant de raccordement (14) et un deuxième joint statique (46) entre le composant de raccordement (14) et le connecteur (16).

14. Ensemble raccord (10) selon l'une quelconque des revendications précédentes, **caractérisé en ce que** le composant tubulaire (12) est fait de métal, de préférence l'aluminium.

15. Ensemble raccord (10) selon l'une quelconque des revendications précédentes, **caractérisé en ce que** le composant de raccordement (14) est fait en plastique.

16. Unité de climatisation comprenant une carrosserie (58) et un ensemble raccord (10) selon l'une quelconque des revendications précédentes.

17. Unité de climatisation selon la revendication 16, **caractérisée en ce que** le composant de raccordement (14) est fixé sur la carrosserie (58) par un raccord (60) fixe en rotation dans le sens de la circonférence.

18. Unité de climatisation selon la revendication 17, **caractérisée en ce que** le raccord (60) fixe en rotation est équipé de saillies (54) s'étendant dans la direction axiale du composant de raccordement (14) et d'évidements (56) sur la carrosserie (58), qui sont tous en prise les uns avec les autres de façon ajustée.

19. Unité de climatisation selon la revendication 17 ou 18, **caractérisée en ce que** le raccord (60) fixe en rotation est conformé de façon à ce que la carrosserie (58) et le composant de raccordement (14) soient fixés l'une à l'autre, sous un, de préférence exactement un, angle prédéterminé.

20. Procédé de raccordement d'un ensemble raccord selon l'une quelconque des revendications 1 à 15, comprenant les étapes suivantes :
- Fourniture d'un composant tubulaire (12), d'un connecteur (16) et d'un composant de raccordement (14) séparé,
- Fixation du composant de raccordement (14) à l'extrémité du composant tubulaire (12) et fixation du composant de raccordement (14) au composant tubulaire (12) avec un raccord de verrouillage (24), et
- Insertion du composant de raccordement (14) fixé au composant tubulaire (12) dans le connecteur (16) et fixation du composant de raccordement (14) au connecteur (16).

21. Procédé selon la revendication 20, **caractérisé en ce que** le composant de raccordement (14) est inséré sur le composant tubulaire (12) sous un, de préférence exactement un, angle prédéterminé par rapport au composant tubulaire (12), et fixé au composant tubulaire (12) avec un raccord (28) fixe en rotation sous cet angle, et/ou **en ce que** le composant de raccordement (14) est fixé au composant tubulaire (12) sous un, de préférence exactement un, angle prédéterminé sur la carrosserie (58) de l'unité de climatisation selon l'une quelconque des revendications 16 à 19 et fixé à la carrosserie (58) avec un raccord (60) fixe en rotation sous cet angle.

22. Procédé selon la revendication 20 ou 21,
**caractérisé en ce que** le composant de raccordement (14) est introduit dans le connecteur (16) sous exactement un angle prédéterminé par rapport au connecteur (16), et fixé au connecteur (16) sous ce même angle au moyen du raccord (38) ajusté.
